# EUROPEAN PATENT APPLICATION

(11) **EP 4 343 896 A1**
(43) Date of publication of application: **27.03.2024**
(21) Application number: 22932495.9
(22) Date of filing: 27.07.2022
(51) Int. Cl.: H01M 4/62, H01M 10/0525

(54) **ELECTRODE PLATE AND PREPARATION METHOD THEREFOR, SECONDARY BATTERY AND ELECTRIC DEVICE**

(71) Applicant: Contemporary Amperex Technology Co., Limited, Ningde City, Fujian Province 352100 (CN)
(72) Inventor: XU, Jian, Ningde Fujian 352100 (CN); XU, Yunpeng, Ningde Fujian 352100 (CN); WU, Yanying, Ningde Fujian 352100 (CN); WANG, Xinghui, Ningde Fujian 352100 (CN)
(74) Representative: Rowlands, Stuart Michael
(86) International application number: PCT/CN2022/108117
(87) International publication number: WO 2024/020821

(57) **Abstract**

An electrode plate, which includes a current collector and an active material layer arranged on at least one surface of the current collector. The active material layer includes an electrode active material and a softener. The softener includes one or more of A diblock copolymer A-B and a triblock copolymer A-B-A, where block A includes a polyether segment, and block B includes one or more of a polyamide segment, a polyvinylpyrrolidone segment and a polyacrylonitrile segment.

## Description

### TECHNICAL FIELD

The present application relates to the field of secondary battery technology, and more particularly, to an electrode plate and a preparation method thereof, a secondary battery and an electrical device.

### BACKGROUND

The statements herein merely provide background information related to the present application and may not necessarily constitute prior arts.

Lithium-ion batteries have been widely used as power sources for various mobile devices due to their outstanding advantages such as high energy density, long cycle life, high operating voltage, wide application temperature, and environmental advantages. In the context of energy shortages, environmental protection and carbon neutrality, lithium-ion batteries are developing rapidly in the fields of electric vehicles and energy storage, and have the potential to replace traditional energy sources. High energy density is one of the development directions of the battery, and increasing a compaction density of the electrode plate is one way to increase the energy density of the battery. However, a higher compaction density often leads to a decrease in flexibility of the electrode plate, resulting in cracking during a winding process of the electrode plate.

### SUMMARY

According to various embodiments of the present application, an electrode plate and a preparation method thereof, a secondary battery, and an electrical device are provided. In accordance with a first aspect of the present application, an electrode plate is provided, including a current collector and an active material layer disposed on at least one surface of the current collector, and the active material layer includes an electrode active material and a softener.

The softener includes one or more of a diblock copolymer A-B and a triblock copolymer A-B-A, where block A includes a polyether segment, block B includes one or more of a polyamide segment, a polyvinylpyrrolidone segment and a polyacrylonitrile segment.

In the present application, by introducing a softener having a certain structure, the flexibility of the electrode plate can be effectively improved without causing obvious negative effects on other performances of the battery. Due to the improved flexibility of the electrode plate, the electrode is enabled to have a higher compaction density during pressing without causing cracking of the electrode plate, which effectively improves the energy density of the battery without causing cracking of the electrode plate during processing.

In some embodiments, the polyether segment includes one or more of a polyethylene glycol segment, a polypropylene glycol segment, a polytetramethylene glycol segment, and a polypentylene glycol segment. A suitable polyether segment can improve the flexibility of the electrode plate without causing a cohesion force to be too low or a decrease in cohesive force.

In some embodiments, a ratio of a degree of polymerization of the block A to the block B is (2 to 50): 1. Optionally, the ratio of the degree of polymerization of the block A to the block B is (2 to 25): 1. An appropriate ratio of the degree of polymerization can make the electrode plate have a better flexibility, and the dispersion of the slurry is more stable during pulping, and the prepared electrode plate is more uniform and has lower resistance.

In some embodiments, the degree of polymerization of the block A is in a range of 4 to 2000. Optionally, the degree of polymerization of the block A is in a range of 4 to 800. The degree of polymerization of the block A is controlled within a certain range which can effectively improve the flexibility of the electrode plate.

In some embodiments, the degree of polymerization of the block B is in a range of 2 to 1000. Optionally, the degree of polymerization of the block B is in a range of 2 to 400. The degree of polymerization of block B is controlled within a certain range which enables the softener to have a sufficient hydrogen bond force with the active material, and to be anchored on the active material, thereby the dispersion of the slurry is enabled to be more stable during pulping, and the improvement in flexibility of the electrode plate is also enabled to be more uniform.

In some embodiments, a weight-average molecular weight of the softener ranges from 1000 Da to 200000 Da. Optionally, the weight-average molecular weight of the softener ranges from 2000 Da to 100000 Da. A suitable weight-average molecular weight can take into account both the modification effect of the softener on the electrode plate and the solubility in the solvent during pulping.

In some embodiments, in the active material layer, a mass percentage of the softener is in a range of 0.02% to 3%. Optionally, the mass percentage of the softener is in a range of 0.05% to 2% %. A certain amount of softener can effectively improve the flexibility of the electrode plate without causing an excessive decrease in cohesive force, a powder falling and other undesirable phenomena.

In some embodiments, the softener is a polyether-polyamide-polyether block copolymer.

Optionally, the polyether segment includes one or more of a polyethylene glycol segment and a polypropylene glycol segment.

Optionally, the polyamide segment includes one or more of an aliphatic polyamide segment and an aromatic polyamide segment.

In some embodiments, the softener has a structure shown in formula I: 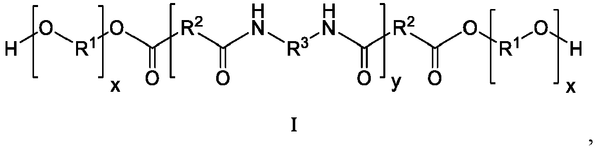 where, each occurrence of R¹ is independently selected from an aliphatic alkylene group having 2 to 5 carbon atoms in a main chain.

Occurrences of R² and R³, at each time, are independently selected from one of an aliphatic alkylene group having 2 to 14 carbon atoms in the main chain and an aromatic alkylene group having 6 to 10 carbon atoms in the main chain, or a combination thereof, respectively.

Each occurrence of x is independently selected from any integer within a range of 4 to 2000; and y is selected from any integer within a range of 2 to 1000.

In some embodiments, the electrode plate is a positive electrode plate, and a compaction density of the electrode plate ranges from 2.40 g/cm³ to 3.75 g/cm³.

In some embodiments, the electrode plate is a negative electrode plate, and the compaction density of the electrode plate ranges from 1.50 g/cm³ to 1.80 g/cm³. Compared with the traditional electrode plates having the same composition, the electrode plate made by adding the softener in the present application can further increase the compaction density of the electrode plate by 0.05 g/cm³ to 0.3 g/cm³.

In some embodiments, the electrode plate is a positive electrode plate, and a resistance of the electrode plate is <1.5 Ω. Optionally, the resistance of the electrode plate is ≤0.8 Ω. Further optionally, the resistance of the electrode plate is ≤ 0.5 Ω.

In some embodiments, the electrode plate is a negative electrode plate, and the resistance of the electrode plate is <0.05 Ω. Optionally, the resistance of the electrode plate is ≤0.02 Ω.

Compared with the traditional plate having the same composition, the resistance of the electrode plate prepared by adding a softener in the present application can be reduced by 10% to 40%.

In accordance with a second aspect of the present application, a preparation method of the electrode plate described in one or more of the foregoing embodiments is provided, including the following steps: mixing the electrode active material, the softener and a solvent to prepare an electrode slurry; and coating the electrode slurry on at least one surface of the current collector, drying and pressing.

In some embodiments, the electrode slurry has a viscosity ranging from 4000 mPa·s to 35000 mPa·s. Optionally, the electrode slurry has a viscosity ranging from 6000 mPa·s to 20000 mPa·s. An appropriate viscosity of electrode slurry enables the flexibility of the prepared electrode plate to be improved more uniformly, and enables the resistance of the electrode plate to be smaller.

In accordance with a third aspect of the present application, a secondary battery is provided, which includes the electrode plate according to one or more of the aforementioned embodiments.

In accordance with a fourth aspect of the present application, a battery module is provided, which includes the aforementioned secondary battery.

In accordance with a fifth aspect of the present application, a battery pack is provided, which includes the aforementioned battery module.

In accordance with a sixth aspect of the present application, an electrical device is provided, which includes one or more of the aforementioned secondary battery, battery module, and battery pack.

Details of one or more embodiments of the present application are set forth in the accompanying drawings and the description below. Other features, objects and advantages of the present application will be apparent from the description, drawings and claims.

### BRIEF DESCRIPTION OF DRAWINGS

For a better description and illustration of embodiments or examples of those inventions disclosed herein, reference may be made to one or more of the accompanying drawings. Additional details or examples used to describe the drawings should not be considered as limitations on the scope of any of the disclosed inventions, the embodiments or examples currently described, and the best mode of these inventions as currently understood.
FIG. 1 is a schematic diagram of a secondary battery according to an embodiment of the present application.
FIG. 2 is an exploded view of the secondary battery according to an embodiment of the present application shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application shown in FIG. 4.
FIG. 6 is a schematic diagram of an electrical device in which a secondary battery is used as a power source according to an embodiment of the present application.
FIG. 7 shows CV (cyclic voltammetry) curves of button batteries made from positive electrode plates in Example 1 and Comparative Example 1 of the present application.
FIG. 8 shows DCR (direct current resistance) test results of the batteries in Example 1 and Comparative Example 1 of the present application.
FIG. 9 shows results of rate charging test for the batteries in Example 1 and Comparative Example 1 of the present application.
FIG. 10 shows results of rate discharge test for the batteries in Example 1 and Comparative Example 1 of the present application.
FIG. 11 shows results of high and low temperature performance test of the batteries in Example 1 and Comparative Example 1 of the present application.
FIG. 12 shows results of cycle performance test for the batteries in Example 1 and Comparative Example 1 of the present application.

Reference signs are explained as follows:
1: battery pack; 2: upper box; 3: lower box; 4: battery module; 5: secondary battery; 51: housing; 52: electrode assembly; 53: cover plate; and 6: electrical device.

### DETAILED DESCRIPTION OF EMBODIMENTS

To make the objectives, technical solutions and advantages of the present application clearer, the present application will be further described in detail below in conjunction with the accompanying drawings and embodiments. It should be understood that the specific embodiments described here are merely intended to illustrate the technical solutions of the present application, and are not intended to limit the protection scope of the present application.

Unless otherwise defined, all technical and scientific terms as used herein have the same meanings as those commonly understood by those skilled in the art of the present disclosure. The terms used in the specification of the present application are merely intended to describe specific embodiments, and are not intended to limit the present disclosure. The expression "and/or" as used herein includes any and all combinations of one or more related listed items.

Due to the increasing market demand for high energy density secondary batteries, how to further increase the energy density of batteries at the existing level is one of the hot spots in the field of secondary battery research. As we all know, during a rolling process, the energy density of the electrode plate can be improved by increasing the compaction density of the electrode plate, and then the energy density of the battery can be improved. However, the compaction density is often contradictory to the processing performance. Under high compaction density, the flexibility of the electrode plate will deteriorate, which will cause the electrode plate to be prone to fracture and damage during the rolling, winding and other processes, resulting in that the yield rate of the electrode plate processing is greatly reduced, and even the machinability is completely lost.

Based on this, a first aspect of the present application provides an electrode plate, including a current collector and an active material layer disposed on at least one surface of the current collector, and the active material layer includes an electrode active material and a softener.

The softener includes one or more of diblock copolymers A-B and triblock copolymers A-B-A, where, block A includes polyether segments, and block B includes one or more of polyamide segments and polyvinylpyrrolidone segments and polyacrylonitrile segments.

In the present application, the flexibility of the electrode plate can be effectively improved by introducing a softener having a certain structure. In this structure, the B block has a certain hydrogen bond force with a surface of the main material such as the active material or a conductive agent, so that the softener can be anchored on the surface of the main material and evenly dispersed in the active material layer along with the main material. Because block A has a certain length, the block A can be embedded in a molecular chain of a binder such as polyvinylidene fluoride (PVDF), which can reduce the order of the molecular structure of PVDF, thereby reducing a crystallinity of PVDF, and decreasing a cohesion of PVDF to an appropriate degree, so that the flexibility of the electrode plate can be improved without causing obvious negative effects on other performances of the battery. Due to the improved flexibility of the electrode plate, a higher compaction density can be obtained during pressing without causing cracking of the electrode plate, so that the energy density of the battery can be effectively improved without causing cracking of the electrode plate during processing. In addition, during pulping, since the block A has a certain steric hindrance, the agglomeration of main materials such as active materials or conductive agents can be avoided, thereby the dispersion of the main materials in the electrode slurry is improved, and the resistance of the electrode plate is reduced.

It can be understood that in the present application, as long as a certain segment contains key functional groups, it should be included in the scope of the present application. For example, as long as an amide functional group is contained in a polymer segment, no matter whether a substituent or what kind of substituent is contained in the polymer segment, the polymer segment is regarded as a "polyamide segment".

In some embodiments, the polyether segments include one or more of polyethylene glycol segments, polypropylene glycol segments, polytetramethylene glycol segments, and polypentylene glycol segments. Since the polyether segment needs to be embedded in the PVDF molecular chain, so as to reduce the cohesion of PVDF and improve flexibility, and the polyether segment will also affect the dispersion of the electrode slurry, therefore, it would be necessary to control a length of the polyether segment within an appropriate range, and a suitable type of polyether segment is desired, such as aromatic polyether, which is difficult to embed into PVDF molecular segment, and thus cannot improve the flexibility of the electrode plate. A suitable polyether segment can improve the flexibility of the electrode plate without causing the cohesion force to be too low or the cohesive force to decline.

In some embodiments, a ratio of the degree of polymerization of block A and block B is (2~50) : 1. Optionally, the ratio of the degree of polymerization of block A and block B may be, for example, (2~25) : 1, and for another example, the ratio may also be 5 : 1, 10 : 1, 15 : 1, 20 : 1, 25 : 1, 30 : 1, 35 : 1, 40: 1 or 45: 1. An appropriate ratio of the degree of polymerization enables the electrode plate to have a better flexibility, and enables the dispersion of the slurry to be more stable during pulping, thus, the prepared plate is more uniform and has a lower resistance.

In some embodiments, the degree of polymerization of block A is in a range of 4 to 2000. Optionally, the degree of polymerization of block A may range from 4 to 800, in other embodiments, the degree of polymerization of block A may also be 50, 100, 150, 200, 250, 300, 350, 400, 450, 500, 550, 600, 650, 700, 750, 800, 850, 900, 950, 1000, 1050, 1100, 1150, 1200, 1250, 1300, 1350, 1400, 1450, 1500, 1550, 1600, 1650, 1700, 1750, 1800, 1850, 1900 or 1950. The degree of polymerization of the block A is controlled to be within a certain range, which can effectively improve the flexibility of the electrode plate.

In some embodiments, the degree of polymerization of block B is in a range of 2 to 1000. Optionally, the degree of polymerization of block B may be in a range of 2 to 400, in other embodiments, the degree of polymerization of block B may also be 25, 50, 75, 100, 125, 150, 175, 200, 225, 250, 275, 300, 325, 350, 375, 400, 425, 450, 475, 500, 525, 550, 575, 500, 525, 550, 575, 600, 625, 650, 675, 700, 725, 750, 775, 800, 825, 850, 875, 900, 925, 950 or 975. The degree of polymerization of block B is controlled to be within a certain range, which enables the softener and the active material to have sufficient hydrogen bond force, to be anchored on the active material, thereby the dispersion of the slurry is more stable during pulping, and the improvement in flexibility of the electrode plate is also more uniform.

It can be understood that, in the present application, if a certain block contains only one type of segment, the degree of polymerization of this block refers to an average value of the degrees of polymerization of this type of segments in all softener molecules. For example, when only polyamide segments are contained in block B, the "degree of polymerization of block B" refers to the average value of the degrees of polymerizations of polyamide segments contained in all softener molecules.

It can be understood that, in the present application, when a certain block contains mixed segments, the degree of polymerization of this block refers to a sum of the respective degrees of polymerization of these mixed segments. For example, when both polyamide and polyacrylonitrile segments are contained in block B, the "degree of polymerization of block B" refers to the sum of the degree of polymerization of polyamide and the degree of polymerization of polyacrylonitrile in this block. As for the degree of polymerization of a certain segment in this block, the degree of polymerization of this segment refers to an average value of the degrees of polymerization of this type of segments in multiple softener molecules. For example, when both polyamide and polyacrylonitrile segments are contained in block B, the aforementioned "degree of polymerization of polyamide" refers to the average value of the degrees of polymerization of polyamide segments contained in all softener molecules.

In some embodiments, a weight-average molecular weight of the softener is 1000 Da to 200000 Da. Optionally, the weight-average molecular weight of the softener may be, for example, 2000 Da to 100000 Da, and for another example, the weight-average molecular weight of the softener may also be 5000 Da, 10000 Da, 15000 Da, 20000 Da, 25000 Da, 30000 Da, 35000 Da, 40000 Da, 45000 Da, 50000 Da, 55000 Da, 60000 Da, 65000 Da, 70000 Da, 75000 Da, 80000 Da, 85000 Da, 90000 Da or 95000 Da. A suitable weight-average molecular weight can take into account both the modification effect of the softener on the electrode plate and the solubility in the solvent during pulping.

In some embodiments, in the active material layer, a mass percentage of the softener is 0.02% to 3%. Optionally, the mass percentage of the softener may be, for example, 0.05% to 2%, and for another example, the mass percentage of the softener may also be 0.25%, 0.5%, 0.75%, 1%, 1.25%, 1.5%, 1.75%, 2%, 2.25%, 2.5% or 2.75%. A certain amount of softener can effectively improve the flexibility of the electrode plate without causing excessive decrease in cohesive force, powder falling and other undesirable phenomena.

In some embodiments, the softener is a polyether-polyamide-polyether block copolymer.

Optionally, the polyether segment includes one or more of a polyethylene glycol segment and a polypropylene glycol segment.

Optionally, the polyamide segment includes one or more of an aliphatic polyamide segment and an aromatic polyamide segment.

In some embodiments, the softener has a structure shown in formula I: 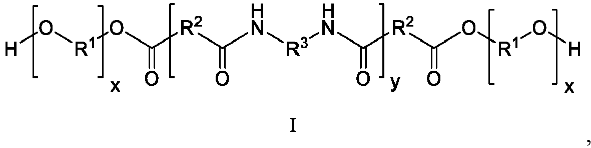 where, each occurrence of R¹ is independently selected from an aliphatic alkylene group having 2 to 5 carbon atoms in the main chain. Optionally, the number of carbon atoms in the main chain of the aliphatic alkylene group may also be, for example, 3 or 4.

Occurrences of R² and R³, at each time, are independently selected from one of an aliphatic alkylene group having 2 to 14 carbon atoms in the main chain and an aromatic alkylene group having 6 to 10 carbon atoms in the main chain, or a combination there of, respectively. Optionally, the number of carbon atoms in the main chain of the aliphatic alkylene group may also be 4, 6, 8, 10 or 12. Optionally, the number of carbon atoms in the main chain of the aromatic alkylene group may also be 7, 8 or 9.

Each occurrence of x is independently selected from any integer within a range of 2 to 800. It can be understood that x is the degree of polymerization of the aforementioned block A;
y is selected from any integer within a range of 1 to 400. It can be understood that y is the degree of polymerization of the aforementioned block B;

Optionally, each occurrence of R¹ is independently selected from the following groups: -CH₂CH₂-, -CH₂CH₂CH₂-, -CH₂CH₂CH₂CH₂- or -CH₂CH₂CH₂CH₂CH₂-.

Optionally, occurrences of R² and R³, at each time, are independently selected from -CH₂CH₂-, -CH₂CH₂CH₂-, -CH₂CH₂CH₂CH₂-, -CH₂(CH₂)₃CH₂-, -CH₂(CH₂)₄CH₂-, -CH₂(CH₂)₅CH₂-, -CH₂(CH₂)₆CH₂-, -CH₂(CH₂)₇CH₂-, -CH₂(CH₂)₈CH₂-, -CH₂(CH₂)₉CH₂-, -CH₂(CH₂)₁₀CH₂-, -CH₂(CH₂)₁₁CH₂-, -CH₂(CH₂)₁₂CH₂-, 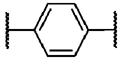 or a reasonable combination of part of the above groups, for example, 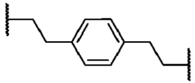 may be consisted of a phenylene group and two ethylene groups.

In the present application, for an aromatic hydrocarbylene group, the number of carbon atoms in the main chain includes all ring-forming atoms on the aromatic ring, for example, the number of carbon atoms in the main chain of a phenylene group is considered to be 6.

In the present application, the term "hydrocarbylene" refers to a hydrocarbyl group derived from a hydrocarbyl group having two monovalent radical centers by removing one hydrogen atom. Suitable examples of aliphatic alkylene groups include, but are not limited to: methylene (-CH₂-), 1,1-ethyl group (-CH(CH₃)-), 1,2-ethyl group (-CH₂CH₂-), 1,1-propyl group (-CH(CH₂CH₃)-), 1,2-propyl group (-CH₂CH(CH₃)-), 1,3-propyl group (-CH₂CH₂CH₂-) and 1,4-butyl group (-CH₂CH₂CH₂CH₂- ); 1,2-vinyl group (-CH=CH-); ethynylene group (-C=C-), propargyl group (-CH₂C≡C-) and 4-pentynyl group (-CH₂CH₂CH₂C≡C-); Suitable examples of aromatic alkylene include, but are not limited to: phenylene group 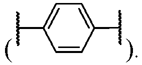 In some embodiments, the electrode plate is a positive electrode plate, and the compaction density of the electrode plate is in a range of 2.40 g/cm^{3 to} 3.75 g/cm³. Optionally, the compaction density of the electrode plate may also be, for example, 2.50 g/cm³, 2.60 g/cm³, 2.70 g/cm³, 2.80 g/cm³, 2.90 g/cm³, 3.10 g/cm³, 3.20 g/cm³, 3.30 g/cm³, 3.40 g/cm³, 3.50 g/cm³, 3.60 g/cm³ or 3.70 g/cm³.

Optionally, when the positive electrode active material is lithium iron phosphate, the compaction density of the electrode plate is 2.40 g/cm³ to 2.60 g/cm³.

Optionally, when the positive electrode active material is a ternary positive electrode material, the compaction density of the electrode plate is 3.30 g/cm³ to 3.75 g/cm³.

In some embodiments, the electrode plate is a negative electrode plate, and the compaction density of the electrode plate is in a range of 1.50 g/cm^{3 to} 1.80 g/cm³. Optionally, the compaction density of the electrode plate may also be, for example, 1.60 g/cm³, 1.65 g/cm³, 1.70 g/cm³ or 1.75 g/cm³.

Compared with the traditional plate having the same composition, the electrode plate made by adding the softener in the present application can further increase the compaction density of the electrode plate by 0.05 g/cm³ to 0.3 g/cm³.

In some embodiments, the electrode plate is a positive electrode plate, and the resistance of the electrode plate is ≤ 1.5 Ω. Optionally, the resistance of the electrode plate is ≤ 0.8 Ω. Further optionally, the resistance of the electrode plate is ≤0.5Ω.

In some embodiments, the electrode plate is a negative electrode plate, and the resistance of the electrode plate is <0.05 Ω. Optionally, the resistance of the electrode plate is ≤0.02 Ω.

Compared with the traditional plate having the same composition, the resistance of the electrode plate made by adding a softener in the present application can be reduced by 10% to 40%.

A second aspect of the present application provides a method for preparing the electrode plate according to one or more of the aforementioned embodiments. The method includes the following steps: mixing an electrode active material, a softener and a solvent to prepare an electrode slurry; and coating the electrode slurry on at least one surface of the current collector, drying and pressing the same.

In some embodiments, a viscosity of the electrode slurry is in a range of 4000 mPa·s to 35000 mPa·s. Optionally, the viscosity of the electrode slurry may also be, for example, 8000 mPa s, 10000 mPa s, 12000 mPa s, 14000 mPa s, 16000 mPa s, 18000 mPa s, 20000 mPa s, 22000 mPa s, 24000 mPa·s, 26000 mPa s, 28000 mPa s, 30000 mPa s, 32000 mPa s or 34000 mPa s, and for another example, the viscosity of the electrode slurry may also be in a range of 6000 mPa·s to 20000 mPa·s. An appropriate viscosity of the electrode slurry enables the flexibility of the prepared plate to be improved more uniformly, and enables the resistance of the electrode plate to be smaller.

The softener molecules or various blocks may be obtained from commercial channels, or may be prepared by methods recorded in existing literature. For example, polyamide segments may be obtained by polymerization of diamines and diacids.

A third aspect of the present application provides a secondary battery, which includes the electrode plate according to one or more of the aforementioned embodiments.

A fourth aspect of the present application provides a battery module, which includes the aforementioned secondary battery.

A fifth aspect of the present application provides a battery pack, which includes the aforementioned battery module.

A sixth aspect of the present application provides an electrical device, which includes one or more of the aforementioned secondary battery, battery module, and battery pack.

In addition, the secondary battery, the battery module, the battery pack, and the electrical device of the present application will be described below with appropriate reference to the accompanying drawings.

In one embodiment of the present application, a secondary battery is provided. Typically, the secondary battery includes a positive electrode plate, a negative electrode plate, an electrolyte, and a separation film. During a charging-and-discharging process of the battery, active ions are intercalated and extracted back and forth between the positive electrode plate and the negative electrode plate. The electrolyte plays a role of conducting ions between the positive electrode plate and the negative electrode plate. The separation film is arranged between the positive electrode plate and the negative electrode plate. The separation film mainly plays a role in preventing a short circuit of the positive and negative electrodes, and also allowing ions to pass through.

At least one of the positive electrode plate and negative electrode plate of the secondary battery provided in the present application is the electrode plate provided in the first aspect of the present application. For example, the positive electrode plate adopts the electrode plate provided in the first aspect of the present application, the negative electrode plate adopts a conventional negative electrode plate, or alternatively, the negative electrode plate adopts the electrode plate provided in the first aspect of the present application, and the positive electrode plate adopts a conventional positive electrode plate. The structure and material of the conventional positive electrode plate or negative electrode plate are as follows:

### Positive Electrode Plate

The positive electrode plate includes a positive electrode current collector and a positive electrode film layer disposed on at least one surface of the positive electrode current collector, and the positive electrode film layer includes the positive electrode active material according to the first aspect of the present application.

As an example, the positive electrode current collector has two opposite surfaces along a thickness direction of the positive electrode current collector, and the positive electrode film layer is disposed on any one or both of the two opposite surfaces of the positive electrode current collector.

In some embodiments, the positive electrode current collector may be a metal foil or a composite current collector. For example, the metal foil may be an aluminum foil. The composite current collector may include a base layer of polymer material and a metal layer formed on at least one surface of the polymer material base layer. The composite current collector may be formed by forming a metal material (such as aluminum, aluminum alloy, nickel, nickel alloy, titanium, titanium alloy, silver and silver alloy, etc.) on a polymer material substrate (such as polypropylene (PP), polyethylene terephthalic acid ethylene glycol ester (PET), polybutylene terephthalate (PBT), polystyrene (PS), polyethylene (PE) or other substrates).

In some embodiments, the positive electrode active material may be a positive electrode active material known in the art for batteries. As an example, the positive electrode active material may include at least one of the following materials: an olivine-structured lithium-containing phosphate, a lithium transition metal oxide, and their respective modified compounds. However, the present application is not limited to these materials, other conventional materials that can be used as positive electrode active materials of batteries may also be used. These positive electrode active materials may be used alone or in a combination of two or more. Among them, examples of lithium transition metal oxides may include, but are not limited to, at least one of a lithium cobalt oxide (such as LiCoO₂), a lithium nickel oxide (such as LiNiO₂), a lithium manganese oxide (such as LiMnO₂, LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium nickel cobalt aluminum oxide (such as LiNi_{0.85}Co_{0.15}Al_{0.05}O₂) and its modified compounds, etc. Examples of lithium-containing phosphates with an olivine structure may include, but are not limited to, at least one of a lithium iron phosphate (such as LiFePO₄ (also abbreviated as LFP)), a composite material of lithium iron phosphate and carbon, a lithium manganese phosphate (such as LiMnPO₄), a composite material of lithium manganese phosphate and carbon, a lithium iron phosphate, and a composite material of lithium iron phosphate and carbon.

In some embodiments, the positive electrode film layer may also optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene ethylene terpolymer, tetrafluoroethylene-hexafluoropropylene copolymer and fluorine-containing acrylate resin.

In some embodiments, the positive electrode film layer may also optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: the components mentioned above for the preparation of the positive electrode plate, such as the positive electrode active material, the conductive agent, the binder and any other components, are dispersed in a solvent (such as N-methylpyrrolidone) to form a positive electrode slurry; the positive electrode slurry is then coated on the positive electrode current collector, and after drying, cold pressing and other processes, the positive electrode plate can be obtained.

### Negative Electrode Plate

The negative electrode plate includes a negative electrode current collector and a negative electrode film layer arranged on at least one surface of the negative electrode current collector, and the negative electrode film layer includes a negative electrode active material.

As an example, the negative electrode current collector has two opposite surfaces along the thickness direction of the negative electrode current collector, and the negative electrode film layer is disposed on any one or both of the two opposite surfaces of the negative electrode current collector.

In some embodiments, the negative electrode current collector may be a metal foil or a composite current collector. For example, the metal foil may be a copper foil. The composite current collector may include a base layer of polymer material and a metal layer formed on at least one surface of the polymer material substrate. The composite current collector may be formed by forming a metal material (such as copper, copper alloys, nickel, nickel alloys, titanium, titanium alloys, silver and silver alloys, etc.) on a polymer material substrate (such as polypropylene (PP), polyethylene terephthalic acid ethylene glycol ester (PET), polybutylene terephthalate (PBT), polystyrene (PS), polyethylene (PE) and other substrates).

In some embodiments, the negative electrode active material may be a negative electrode active material known in the art for batteries. As an example, the negative electrode active material may include at least one of the following materials: artificial graphite, natural graphite, soft carbon, hard carbon, silicon-based material, tin-based material, lithium titanate, and the like. The silicon-based material may include at least one of elemental silicon, silicon-oxygen compounds, silicon-carbon composites, silicon-nitrogen composites, and silicon alloys. The tin-based material may include at least one of elemental tin, tin oxide compounds and tin alloys. However, the present application is not limited to these materials, and other conventional materials that can be used as negative electrode active materials of batteries may also be used. These negative electrode active materials may be used alone or in a combination of two or more.

In some embodiments, the negative electrode film layer may also optionally include a binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may also optionally include a conductive agent. The conductive agent may include at least one of superconducting carbon, acetylene black, carbon black, Ketjen black, carbon dots, carbon nanotubes, graphene and carbon nanofibers.

In some embodiments, the negative electrode film layer may optionally include other additives, for example, a thickener (such as, sodium carboxymethylcellulose (CMC-Na)) and the like.

In some embodiments, the negative electrode plate may be prepared in the following manner: the components mentioned above for the preparation of the negative electrode plate, such as the negative electrode active material, the conductive agent, the binder and any other components, are dispersed in a solvent (such as deionized water) to form a negative electrode slurry; the negative electrode slurry may be coated on the negative electrode current collector, and after drying, cold pressing and other processes, the negative electrode plate can be obtained.

### Electrolyte

The electrolyte plays the role of conducting ions between the positive electrode plate and the negative electrode plate. The present application has no specific limitation on the type of electrolyte, which can be selected according to requirements. For example, electrolytes may be liquid, gel or all solid.

In some embodiments, the electrolyte is an electrolytic solution. The electrolyte solution includes an electrolyte salt and a solvent.

In some embodiments, the electrolyte salt may include at least one of Lithium hexafluorophosphate, Lithium tetrafluoroborate, Lithium perchlorate, Lithium hexafluoroarsenate, Lithium bifluorosulfonimide, Lithium bistrifluoromethosulfonimide, Lithium trifluoromethanesulfonate, Lithium difluorophosphate, Lithium difluoroxalateborate, Lithium dioxalateborate, Lithium difluorodioxalatephosphate, and Lithium tetrafluorooxalatephosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte may optionally include additives. For example, the additives may include negative electrode film-forming additives, positive electrode film-forming additives, and may also include additives that can improve certain performances of the battery, such as additives that improve battery overcharge performance, additives that improve high-temperature or low-temperature performance of batteries, and the like.

### Separation Film

In some embodiments, a separation film is also included in the secondary battery. The present application has no particular limitation on the type of the separation film, and any known porous structure separation film with good chemical stability and mechanical stability may be selected.

In some embodiments, the material of the isolation film may include at least one of glass fiber, non-woven fabric, polyethylene, polypropylene and polyvinylidene fluoride. The separation film may be a single-layer film or a multi-layer composite film, without any particular limitation. When the separation film is a multi-layer composite film, the materials of each layer may be the same or different, with no particular limitation.

In some embodiments, the positive electrode plate, the negative electrode plate and the separation film may be made into an electrode assembly through a winding process or a lamination process.

In some embodiments, the secondary battery may include an outer package. The outer package may be used to encapsulate the above-mentioned electrode assembly and electrolyte.

In some embodiments, the outer package of the secondary battery may be a hard case, such as a hard plastic case, an aluminum case, a steel case, etc. The outer packaging of the secondary battery may also be a soft bag, such as a bag-type soft bag. The material of the soft case may be plastic, and examples of the plastic include polypropylene, polybutylene terephthalate, polybutylene succinate, and the like.

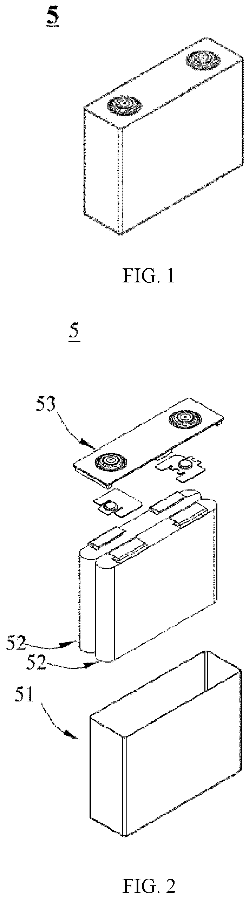

The present application has no special limitation on the shape of the secondary battery, which may be cylindrical, square or any other shape. For example, FIG. 1 shows a square-shaped secondary battery 5 as an example.

In some embodiments, referring to FIG. 2, the outer package may include a housing 51 and a cover plate 53. Where, the housing 51 may include a bottom plate and side plates connected to the bottom plate, and an accommodating cavity is formed by the bottom plate and the side plates. The housing 51 has an opening communicating with the accommodating cavity, and the cover plate 53 can cover the opening to close the accommodating cavity. The positive electrode plate, the negative electrode plate and the separation film may be formed into an electrode assembly 52 through a winding process or a lamination process. The electrode assembly 52 is encapsulated in the accommodating cavity. Electrolyte is infiltrated in the electrode assembly 52. The number of electrode assemblies 52 contained in the secondary battery 5 may be one or more, which can be selected by those skilled in the art according to specific practical demands.

In some embodiments, the secondary battery may be assembled into a battery module, and the number of secondary batteries contained in the battery module may be one or more, and the specific quantity can be selected by those skilled in the art according to the application and capacity of the battery module.

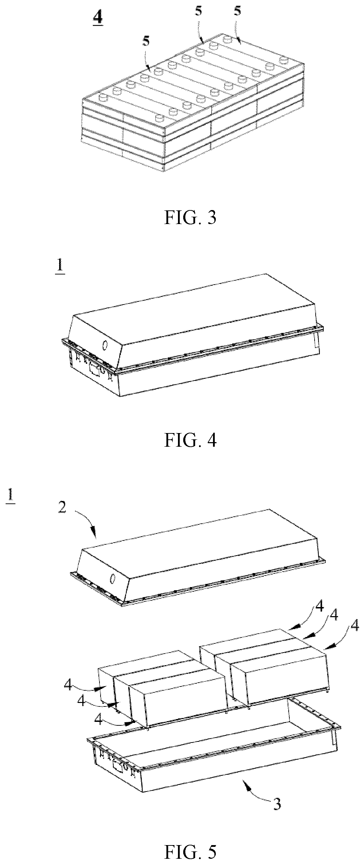

FIG. 3 shows a battery module 4 as an example. Referring to FIG. 3, in the battery module 4, a plurality of secondary batteries 5 may be arranged in sequence along a length direction of the battery module 4. It would be obvious that the plurality of secondary batteries 5 may also be arranged in any other manner. Furthermore, the plurality of secondary batteries 5 may be fixed by fasteners.

Optionally, the battery module 4 may also include a casing having an accommodating space in which a plurality of secondary batteries 5 are accommodated.

In some embodiments, the above-mentioned battery modules may also be assembled into a battery pack, and the number of battery modules contained in the battery pack may be one or more, and the specific quantity maybe selected by those skilled in the art according to the application and capacity of the battery pack.

FIGS. 4 and 5 show the battery pack 1 as an example. Referring to FIGS. 4 and 5, the battery pack 1 may include a battery box and a plurality of battery modules 4 disposed in the battery box. The battery box includes an upper box body 2 and a lower box body 3, the upper box body 2 can be covered on the lower box body 3 to form an enclosed space for accommodating the battery module 4. The plurality of battery modules 4 may be arranged in the battery box in any manner.

In addition, the present application also provides an electrical device, which includes at least one of the secondary battery, battery module, or battery pack provided in the present application. The secondary battery, battery module, or battery pack may be used as a power source of the electrical device, and may also be used as an energy storage unit of the electrical device. The electrical devices may include, but are not limited to, mobile devices, electric vehicles, electric trains, ships and satellites, energy storage systems, etc. Among them, the mobile devices may be mobile phones, laptops, etc.; the electric vehicles may be, but not limited to, pure electric vehicles, hybrid electric vehicles, plug-in hybrid electric vehicles, electric bicycles, electric scooters, electric golf carts, electric trucks, etc.

As the electrical device, a secondary battery, a battery module or a battery pack may be selected according to use requirements of the electrical device.

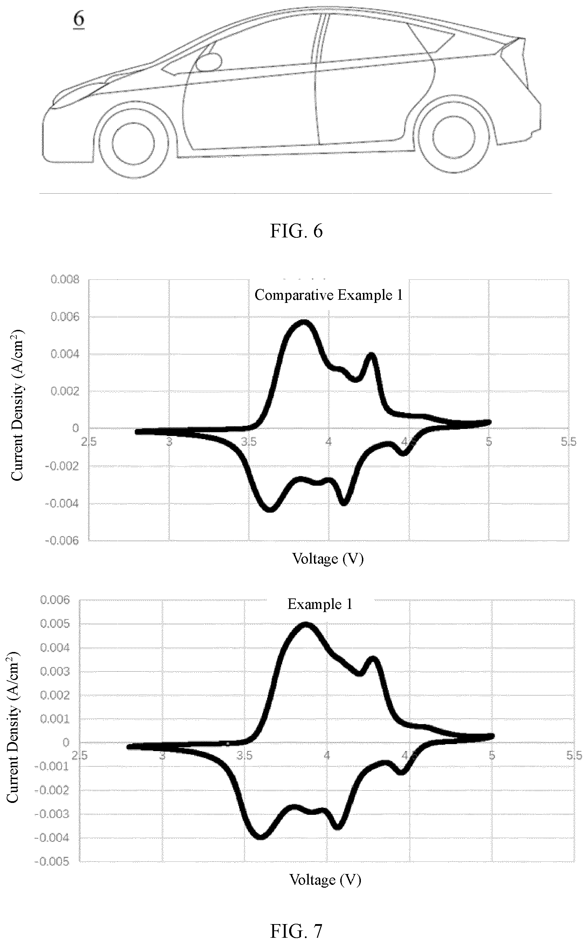

FIG. 6 shows an electrical device 6 as an example. The electrical device may be a pure electric vehicle, a hybrid electric vehicle, or a plug-in hybrid electric vehicle. In order to meet the high power and high energy density requirements of the electrical device for the secondary battery, a battery pack or a battery module may be used.

As another example, the device may be a cell phone, tablet, laptop, or the like. The device is generally required to be light and thin, and a secondary battery may be used as a power source.

The present application will be described in further detail below in conjunction with specific examples and comparative examples. For the experimental parameters not specified in the following specific examples, references may be made to the guidelines given in the present application documents firstly, and may also be made to the experimental manual in the field or other experimental methods known in the art, or to the experimental conditions recommended by the manufacturer. It can be understood that the instruments and raw materials used in the following examples are more specific, and may not be limited to this in other specific examples. The weight of the relevant components mentioned in the examples of the description of the present application may not only refer to the specific content of each component, may also represent a weight ratio relationship among these components. Therefore, as long as the content of the relevant components is scaled up or down according to the description of the embodiment of the present application, it is within the scope disclosed in the embodiment of the description of the present application. Specifically, the weight described in the description of the embodiments of the present application may be µg, mg, g, kg and other well-known mass units in the field of chemistry and chemical engineering.

### Example 1

### (1) Preparation of positive electrode plate:

NCM₈₁₁, conductive carbon, polyvinylidene fluoride, and softener were collected according to a mass ratio of 96.8:2:1:0.2, and dispersed in N-methylpyrrolidone to prepare a positive electrode slurry having a viscosity of 20000 mPa·s; the positive electrode slurry was coated on both sides of the aluminum current collector, and after drying, the coating weight cw = 0.38 g / 1540.25 mm², and then a cold pressing was performed to obtain a positive electrode plate having a compaction density of 3.5 g/cm³.

Where, the softener was 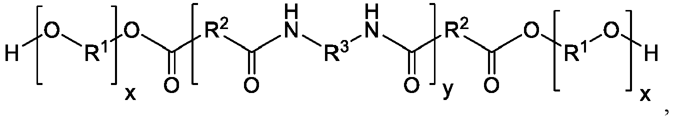 in this formula, R¹ was 1,2-ethylene, R² was 1,4-butylene, R³ was 1,4-butylene, an average value of x was equal to 45, and an average value of y was equal to 15, x/y = 3, and the weight-average molecular weight of the softener was 7000 Da.

### (2) Preparation of negative electrode plate:

Graphite, SBR (styrene-butadiene rubber) and SP (conductive carbon) were mixed in a mass ratio of 90:5:5, then dissolved in deionized water, and stirred evenly to obtain a negative electrode slurry; the negative electrode slurry was coated on a surface of copper foil, and a resulting copper foil is dried and cold-pressed to obtain a negative electrode plate.

(3) The positive electrode plate, separation film, and negative electrode plate were subjected to a winding process, a hot pressing, a liquid injection and an encapsulation to obtain a lithium-ion battery.

### Example 2

Example 2 was basically the same as Example 1, except that the average value of x was equal to 24, the average value of y was equal to 24, and x/y=1.

### Example 3

Example 3 was basically the same as Example 1, except that the average value of x was equal to 60, the average value of y was equal to 1, and x/y=60.

### Example 4

Example 4 was basically the same as Example 1, except that the weight-average molecular weight of the softener was 600 Da while the x/y ratio was kept unchanged.

### Example 5

Example 5 was basically the same as Example 1, except that the weight-average molecular weight of the softener was 210,000 Da while the x/y ratio was kept unchanged.

### Example 6

Example 6 was basically the same as Example 1, except that all R¹ were 1,6-hexylene.

### Example 7

Example 7 was basically the same as Example 1, except that all R¹ were 1,4-phenylene.

### Example 8

Example 8 was basically the same as Example 1, except that a structure of the softener was changed to a diblock copolymer 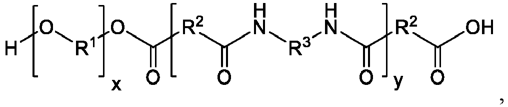 while the ratio of R¹, R², R³, x/y and weight-average molecular weight were kept unchanged

### Example 9

Example 9 was basically the same as Example 1, except that the mass ratio of NCM₈₁₁, conductive carbon, polyvinylidene fluoride, and softener was 93.5:2:1:3.5.

### Example 10

Example 10 was basically the same as Example 1, except that the mass ratio of NCM₈₁₁, conductive carbon, polyvinylidene fluoride, and softener was 95:2:1:1.

### Example 11

Example 11 was basically the same as Example 1, except that the mass ratio of NCM₈₁₁, conductive carbon, polyvinylidene fluoride, and softener was 96.6:2:1:0.4.

### Example 12

Example 12 was basically the same as Example 1, except that after drying, the coating weight cw = 0.45 g / 1540.25 mm², and the cold pressing was performed to obtain a positive electrode plate having a compaction density of 3.5 g/cm³.

### Example 13

Example 13 was basically the same as Example 1, except that after drying, the coating weight cw = 0.38 g / 1540.25 mm², and the cold pressing was performed to obtain a positive electrode plate having a compaction density of 3.65 g/cm³.

### Example 14

Example 14 was basically the same as Example 1, except that after drying, the coating weight cw = 0.45 g / 1540.25 mm², and cold pressing was performed to obtain a positive electrode plate having a compaction density of 3.65 g/cm³.

### Example 15

Example 15 was basically the same as Example 1, except that the mass ratio of NCM₈₁₁, conductive carbon, polyvinylidene fluoride, and softener was 94:2:1:3; and the softener was 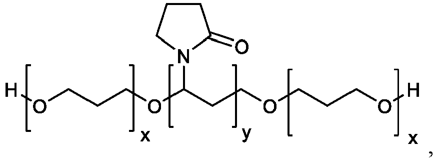 in this formula, the average value of x was equal to 1500, the average value of y was equal to 500, x/y=3, and the weight-average molecular weight of the softener was 140000 Da.

### Example 16

### (1) Preparation of positive electrode plate:

NCM₈₁₁, conductive carbon, and polyvinylidene fluoride were collected according to a mass ratio of 97:2: 1, and dispersed in N-methylpyrrolidone to prepare a positive electrode slurry having a viscosity of 20000 mPa·s; the positive electrode slurry was coated on both sides of the aluminum current collector, and the resulted aluminum current collector was dried and cold-pressed to obtain the positive electrode plate.

### (2) Preparation of negative electrode plate:

Graphite, SBR (styrene-butadiene rubber), SP (conductive carbon), and softener were mixed in a mass ratio of 90:5:4.8:0.2, then dissolved in deionized water, and stirred evenly to obtain a negative electrode slurry, and the negative electrode slurry was coated on the surface of the copper foil, after drying, the coating weight cw = 0.20g/1540.25mm², and then a cold pressing was performed to obtain a negative electrode plate having a compaction density of 1.65 g/cm³.

Where, the softener was 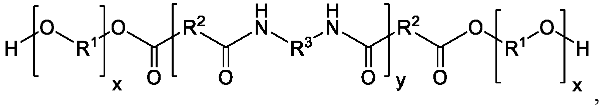 in this formula, R¹ was 1,2-ethylene, R² was 1,4-butylene, R³ was 1,4-butylene, the average value of x was equal to 45, and the average value of y was equal to 15, x/y = 3, and the weight-average molecular weight of the softener was 7000 Da.

(3) The positive electrode plate, separation film, and negative electrode plate were subjected to a winding process, a hot pressing, a liquid injection and an encapsulation to obtain a lithium-ion battery.

### Comparative Example 1

### (1) Preparation of positive electrode plate:

NCM₈₁₁, conductive carbon, and polyvinylidene fluoride were collected according to the mass ratio of 97:2: 1, and dispersed in N-methylpyrrolidone to prepare a positive electrode slurry having a viscosity of 20000 mPa·s; the positive electrode slurry was coated on both sides of the aluminum current collector, after drying, the coating weight cw = 0.38 g / 1540.25 mm², and then a cold pressing was performed to obtain a positive electrode plate having a compaction density of 3.5 g/cm³.

### (2) Preparation of negative electrode plate:

Graphite, SBR (styrene-butadiene rubber) and SP (conductive carbon) were mixed in the mass ratio of 90:5:5, then dissolved in deionized water, and stirred evenly to obtain a negative electrode slurry, and the negative electrode slurry was coated on the surface of copper foil, and a resulting copper foil was dried and cold-pressed to obtain a negative electrode plate.

(3) The positive electrode plate, separation film, and negative electrode plate were subjected to a winding process, a hot pressing, a liquid injection and an encapsulation to obtain a lithium-ion battery.

### Comparative Example 2

### (1) Preparation of positive electrode plate:

NCM₈₁₁, conductive carbon, and polyvinylidene fluoride were collected according to the mass ratio of 97:2: 1, and dispersed in N-methylpyrrolidone to prepare a positive electrode slurry having a viscosity of 20000 mPa·s; and the positive electrode slurry was coated on both sides of the aluminum current collector, after drying, the coating weight cw = 0.45 g/1540.25 mm², and then a cold pressing was performed to obtain a positive electrode plate having a compaction density of 3.5 g/cm³.

### (2) Preparation of negative electrode plate:

Graphite, SBR (styrene-butadiene rubber) and SP (conductive carbon) were mixed in the mass ratio of 90:5:5, then dissolved in deionized water, stirred evenly to obtain a negative electrode slurry, and the negative electrode slurry was coated on the surface of copper foil, and a resulting copper foil was dried and cold-pressed to obtain a negative electrode plate.

(3) The positive electrode plate, separation film, and negative electrode plate were subjected to a winding process, a hot pressing, a liquid injection and an encapsulation to obtain a lithium-ion battery.

### Characterization tests:

### (1) Flexibility test:

An electrode plate without defects was taken and cut, avoiding a thinning area of the electrode plate, along a longitudinal direction to obtain a sample whose length*width was equal to 20cm*2.5cm, the number of samples was 10, the samples were folded firstly, and then placed on a test platform, after that, a rolling was performed on the electrode plate using a 2 kg cylindrical roller once, and if the electrode plate was opaque after the rolling, then a reversely folding and anther rolling will be performed on the electrode plate, it was observed whether the crease was light-transmitting after each rolling, and the above folding and rolling were repeated until the crease of the electrode plate was observed to be light-transmitting. The actual number of folds were recorded, and the output result is the average value of the measurement.

### (2) Resistance test of electrode plate:

The PRCD1100 diaphragm resistance meter of Yuanneng Technology was applied to cut the electrode plate into small pieces having a length > 60mm and a width > 30mm, the diaphragm resistance meter was turned on, the pressure was adjusted ranging from 0.2 MPa to 0.4 MPa, the pneumatic switch was manually flipped upwards, the electrode plate was clamped with a tweezer, and then put into the probe, a switch was manually toggled down to start a test, the resistance data was recorded at this time when the value was stable.

The electrode plates added with softener in various example and comparative examples were subjected to the flexibility test and resistance test of electrode plates, and the obtained results are listed in Table 1:

**Table 1**

| | x/y | Weight-aver age molecular weight IDa | R¹ | Dosage of softene r/% | Cw g/1540 .25 mm² | Compa ction density g/cm³ | Flexibilit y of electrode plate /times | Resistan ce of electrode plate /Ω |
|---|---|---|---|---|---|---|---|---|
| Example 1 | 3 | 7000 | 1,2-ethylene | 0.2 | 0.38 | 3.5 | 4.8 | 0.34 |
| Example 2 | 1 | 7000 | 1,2-ethylene | 0.2 | 0.38 | 3.5 | 2.8 | 0.43 |
| Example 3 | 60 | 5600 | 1,2-ethylene | 0.2 | 0.38 | 3.5 | 3.2 | 0.48 |
| Example 4 | 3 | 600 | 1,2-ethylene | 0.2 | 0.38 | 3.5 | 3.6 | 0.49 |
| Example 5 | 3 | 210000 | 1,2-ethylene | 0.2 | 0.38 | 3.5 | 2.2 | 0.50 |
| Example 6 | 3 | 7000 | 1,6-hexylene | 0.2 | 0.38 | 3.5 | 3.0 | 0.37 |
| Example 7 | 3 | 7000 | 1,4-phenylene | 0.2 | 0.38 | 3.5 | 2.3 | 0.38 |
| Example 8 | 3 | 7000 | 1,2-ethylene | 0.2 | 0.38 | 3.5 | 4.2 | 0.37 |
| Example 9 | 3 | 7000 | 1,2-ethylene | 3.5 | 0.38 | 3.5 | 5.2 | 0.43 |
| Example 10 | 3 | 7000 | 1,2-ethylene | 1 | 0.38 | 3.5 | 5.0 | 0.38 |
| Example 11 | 3 | 7000 | 1,2-ethylene | 0.4 | 0.38 | 3.5 | 5.0 | 0.36 |
| Example 12 | 3 | 7000 | 1,2-ethylene | 0.2 | 0.45 | 3.5 | 3.2 | 0.40 |
| Example 13 | 3 | 7000 | 1,2-ethylene | 0.2 | 0.38 | 3.65 | 3.4 | 0.31 |
| Example 14 | 3 | 7000 | 1,2-ethylene | 0.2 | 0.45 | 3.65 | 2.6 | 0.39 |
| Example 15 | 3 | 140000 | 1,3-propylidene | 0.2 | 0.38 | 3.5 | 3.8 | 0.35 |
| Example 16 | 3 | 7000 | 1,2-ethylene | 0.2 | 0.25 | 1.7 | 5.6 | 0.02 |
| Comparative Example 1 | / | / | / | / | 0.38 | 3.5 | 2.0 | 0.52 |
| Comparativ e Example 2 | / | / | / | / | 0.45 | 3.5 | 1.0 | 0.60 |

Analysis of the data in Table 1 shows that compared with Example 1, Comparative Examples 1 and 2, without the softener of the present application, the toughness of the electrode plate has decreased significantly, the number of times of folding and rolling is less than or equal to 2 times, and the resistance of the electrode plate has also increased significantly, both being greater than 0.5 Ω. In Example 2, the x/y value is on the low side, and the proportion of polyether segment in the softener is lower, resulting in a limited degree of reduction in cohesion to PVDF, so the toughness of the electrode plate is decreased. In Example 3, the x/y value is on the high side, and the proportion of block B is lower, resulting in slightly weaker anchoring force to the main material and limited improvement in dispersibility, so the resistance of the electrode plate has increased to a certain extent. In Example 4, the molecular weight is on the low side, the length of the polyether segment is insufficient, the steric hindrance is small, and the softening and dispersing effects have both reduced. In Example 5, the molecular weight is on the high side, resulting in poor solubility of the softener during pulping, and the dispersion in the active material layer is not uniform enough, which also affects the improvement of the flexibility and resistance of the electrode plate to a certain extent. In Example 6, the polyether segment is too long, which not only results in worse flexibility and resistance of the electrode plate due to the decline in dispersibility and solubility, but also causes problems such as a decrease in the cohesive force of the electrode plate and a powder drop due to a decrease in the cohesive force of the PVDF. In Example 7, the aromatic polyether segment used is difficult to insert into PVDF, so the improvement inflexibility is limited. In Example 8, the diblock copolymer is used, the steric hindrance is slightly smaller, and the cohesion to PVDF is also reduced, so the flexibility is also reduced. In Example 9, an excessive dosage of softener is used, although the flexibility of the electrode plate is improved, but the resistance is also increased, which will lead to a decrease in the adhesion of the electrode plate, a powder drop, and will deteriorate the cycle performance of the battery.

### (3) Evaluations on battery performances

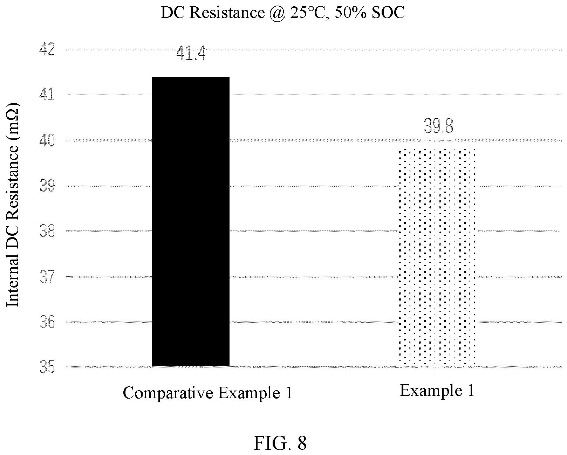

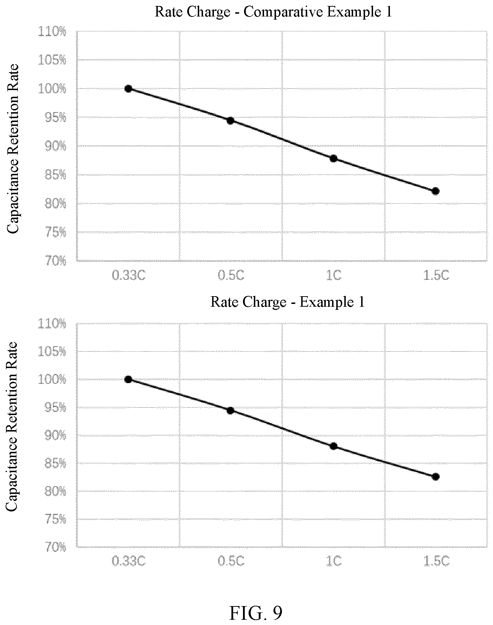

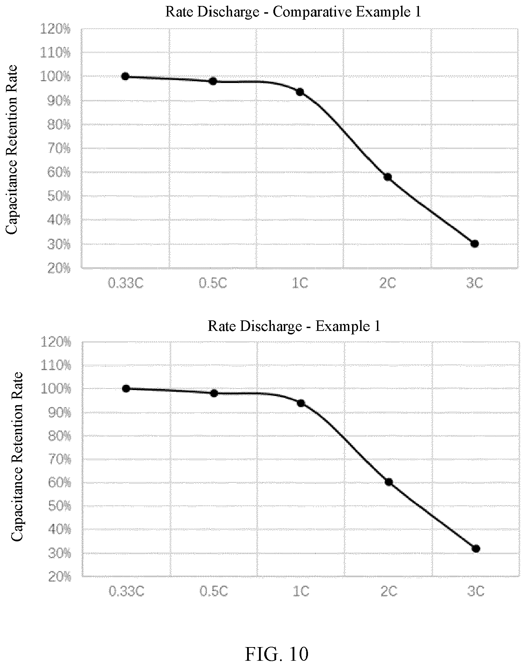

a. The positive electrode plate made in Example 1 and Comparative Example 1 were taken to prepare a button battery, a CV (cyclic voltammetry) test was carried out, and the CV curves obtained are shown in FIG. 7, showing that the addition of softener has no apparent negative effect on stability of the electrode plate.
b. The batteries prepared in Example 1 and Comparative Example 1 were subjected to a DCR (direct current resistance) test, and the results shown in FIG. 8 were obtained. The results show that the addition of the softener has little effect on the direct current resistance of the battery.
c. The batteries prepared in Example 1 and Comparative Example 1 were subjected to a rate charging test according to the parameters shown in FIG. 9. The results show that the addition of the softener had no obvious negative impact on the rate charging performance of the battery.
d. The batteries prepared in Example 1 and Comparative Example 1 were subjected to a rate discharge test according to the parameters shown in FIG. 10. The results show that the addition of the softener had no obvious negative impact on the rate charge performance of the battery.
e. The batteries prepared in Example 1 and Comparative Example 1 were subjected to a high and low temperature performance test according to the following steps:
   Performance test at 25°C: each secondary battery prepared above was placed in a high-and-low temperature box (model: SM-012PF, manufacturer: Guangdong Sanmu Technology Co., Ltd.) at 25°C, and discharged to 2.8 V at 1 C, discharged to 2.5 V at 1 C, standing still for 5 minutes, and then charged to 4.25 V at a constant current of 1 C, charged at the constant voltage, the cut-off current was 0.05 C, the discharge capacity C0 was recorded, standing still for 30 minutes, and then discharged to 2.8 V at 1 C, discharged to 2.5 V at 1 C, standing still for 30 minutes, and then charged to 4.25 V at the constant current of 1 C, charged at the constant voltage, the cut-off current was 0.05 C, then standing still for 5 minutes.

Discharge capacity retention rate at 25°C is (C0/C0) * 100 %.

The rest of the temperature performance test: the temperature of the high and low temperature box was adjusted to a preset temperature, each secondary battery prepared above stood still for 120 minutes, and discharged to 2.8 V at 1 C, discharged at 1 C to 2.5 V, the discharge capacity Cn was recorded, and then standing still for 5 minutes.

Preset temperature discharge capacity retention rate (Cn/C0) * 100 %

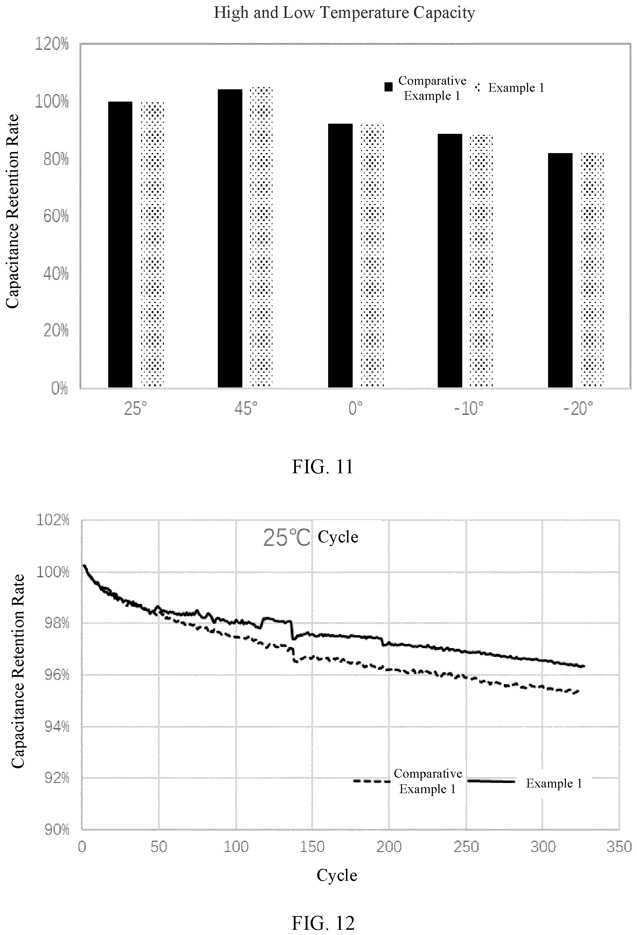

The results obtained are shown in FIG. 11, and the results show that the addition of the softener has no obvious negative impact on the high and low temperature performance of the battery.

f. At 25°C, the secondary batteries prepared in the above Examples and Comparative Examples were charged at a constant current at a rate of 1 C to a charge cut-off voltage of 4.25 V, then charged at a constant voltage to a current ≤0.05 C, after standing still for 5 minutes, the secondary batteries were discharged at a constant current at a rate of 0.33 C to a discharge cut-off voltage of 2.8 V, then standing still for 5min, this is a charge-discharge cycle. According to this method, the battery was subjected to a charge-and-discharge cycle test, and the results obtained are shown in FIG. 12. The results show that the addition of the softener has no negative impact on the cycle performance of the battery, even has improved the cycle performance of the battery.

The technical features of the above-mentioned embodiments may be combined arbitrarily. For the sake of brevity, all possible combinations of the technical features in the above-mentioned embodiments are not described in here. However, as long as there is no contradiction in combinations of these technical features, these combinations should be considered to be within the scope of this specification.

The above-mentioned embodiments only express several implementations of the present application, and the description of these embodiments is relatively specific and detailed, but should not be construed as limiting the scope of the patent application. It should be noted that those skilled in the art may make several modifications and improvements without departing from the concept of the present application, and these modifications and improvements shall all belong to the protection scope of the present application. Therefore, the protection scope of the present application should be determined by the appended claims.

## Claims

1. An electrode plate, comprising:
a current collector; and
an active material layer, disposed on at least one surface of the current collector, and comprising:
an electrode active material; and
a softener, comprising one or more of a diblock copolymer A-B and a triblock copolymer A-B-A,
wherein block A comprises a polyether segment, block B comprises one or more of a polyamide segment, a polyvinylpyrrolidone segment and a polyacrylonitrile segment.

2. The electrode plate according to claim 1, wherein the polyether segment comprises one or more of a polyethylene glycol segment, a polypropylene glycol segment, a polytetramethylene glycol segment and a polypentylene glycol segment.

3. The electrode plate according to any one of claims 1 to 2, wherein a ratio of a degree of polymerization of the block A to the block B is (2-50): 1; and optionally, the ratio of the degree of polymerization of the block A to the block B is (2-25): 1.

4. The electrode plate according to any one of claims 1 to 3, wherein the degree of polymerization of the block A is in a range of 4 to 2000; and optionally, the degree of polymerization of the block A is in a range of 4 to 800.

5. The electrode plate according to any one of claims 1 to 4, wherein the degree of polymerization of the block B is in a range of 2 to 1000; and optionally, the degree of polymerization of the block B is in a range of 2 to 400.

6. The electrode plate according to any one of claims 1 to 5, wherein a weight-average molecular weight of the softener ranges from 1000 Da to 200000 Da; and optionally, the weight-average molecular weight of the softener ranges from 2000 Da to 100000 Da.

7. The electrode plate according to any one of claims 1 to 6, wherein, in the active material layer, a mass percentage of the softener is in a range of 0.02% to 3%; optionally, the mass percentage of the softener is in a range of 0.05% to 2%.

8. The electrode plate according to any one of claims 1 to 7, wherein the softener is a polyether-polyamide-polyether block copolymer;
optionally, the polyether segment comprises one or more of a polyethylene glycol segment and a polypropylene glycol segment; and
optionally, the polyamide segment comprises one or more of an aliphatic polyamide segment and an aromatic polyamide segment.

9. The electrode plate according to any one of claims 1 to 8, wherein the softener has a structure shown in formula I: 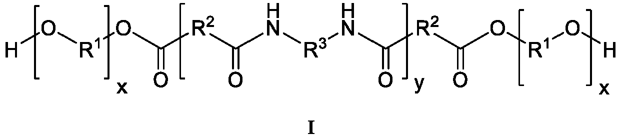
wherein, each occurrence of R¹ is independently selected from an aliphatic alkylene group having 2 to 5 carbon atoms in a main chain;
occurrences of R² and R³, at each time, are independently selected from one of an aliphatic alkylene group having 2 to 14 carbon atoms in the main chain and an aromatic alkylene group having 6 to 10 carbon atoms in the main chain, or a combination thereof, respectively;
each occurrence of x is independently selected from any integer within a range of 4 to 800; and
y is selected from any integer within a range of 2 to 400.

10. The electrode plate according to any one of claims 1 to 9, wherein the electrode plate is a positive electrode plate, and a compaction density of the electrode plate is in a range of 2.40 g/cm³ to 3.75 g/cm³.

11. The electrode plate according to any one of claims 1 to 9, wherein the electrode plate is a negative electrode plate, and a compaction density of the electrode plate is in a range of 1.50 g/cm³ to 1.80 g/cm³.

12. The electrode plate according to any one of claims 1 to 10, wherein the electrode plate is a positive electrode plate, and a resistance of the electrode plate is ≤ 1.5 Ω; and optionally, the resistance of the electrode plate is ≤0.8 Ω; further optionally, the resistance of the electrode plate is ≤0.5 Ω.

13. The electrode plate according to any one of claims 1 to 9 and 11, wherein the electrode plate is a negative electrode plate, and a resistance of the electrode plate is ≤0.05 Ω; and optionally, the resistance of the electrode plate is ≤0.02 Ω.

14. A preparation method of the electrode plate according to any one of claims 1 to 13, comprising:
mixing the electrode active material, the softener and a solvent to prepare an electrode slurry; and
coating the electrode slurry on at least one surface of the current collector, drying and pressing.

15. The preparation method according to claim 14, wherein a viscosity of the electrode slurry ranges from 4000 mPa s to 35000 mPa·s; and optionally, the viscosity of the electrode slurry ranges from 6000 mPa·s to 20000 mPa·s.

16. A secondary battery, comprising the electrode plate according to any one of claims 1-13.

17. An electrical device, comprising the secondary battery according to claim 16.
